# EUROPÄISCHE PATENTANMELDUNG

(11) **EP 1 372 018 A1**
(43) Veröffentlichungstag der Anmeldung: **17.12.2003**
(21) Anmeldenummer: 03008218.4
(22) Anmeldetag: 09.04.2003
(51) Int. Cl.: G02B 27/64, H04N 3/09

(54) **Vorrichtung zur Rundumsicht**

(30) Priorität: 14.06.2002 DE 10226545
(71) Anmelder: Zeiss Optronik GmbH, 73447 Oberkochen (DE)
(72) Erfinder: Höfft, Jens-Rainer, Dr., 73430 Aalen (DE); Kürbitz, Gunther, Dr., 89551 Königsbronn (DE); Marx, Dieter, 73432 Aalen (DE)
(74) Vertreter: Lorenz, Werner, Dr.-Ing.

(57) **Zusammenfassung**

Eine Vorrichtung zur Rundumsicht weist ein Abbildungssystem auf, das in einem mit einem Drehantrieb versehenen Gerätegehäuse angeordnet ist. Das Abbildungssystem weist ein Linsensystem auf, durch welches die Bilder der Objekte nach Durchgang durch das Linsensystem auf einem Detektor abgebildet werden. Zur Kompensierung der durch die Drehung verursachten Bewegungsunschärfe ist eine Gegenbewegungseinrichtung (8) im Strahlengang vorgesehen, die während der Abbildungszeit eine zu der durch den Drehantrieb erzeugten Rotation wenigstens annähernd synchron entgegengesetzt gerichtete Bewegung erzeugt. Die Gegenbewegungseinrichtung (8) ist in einem konvergenten Strahlengang des Linsensystems angeordnet.

## Beschreibung

Die Erfindung betrifft eine Vorrichtung zur Rundumsicht, mit einem Abbildungssystem, das in einem mit einem Drehantrieb versehenen Gerätegehäuse angeordnet ist, wobei das Abbildungssystem ein Linsensystem aufweist, durch welches die Bilder der Objekte nach Durchgang durch das Linsensystem auf einem Detektor abgebildet werden, und wobei zur Kompensierung der durch die Drehung verursachten Bewegungsunschärfe eine Gegenbewegungseinrichtung im Strahlengang vorgesehen ist, die während der Abbildungszeit eine zu der durch den Drehantrieb erzeugten Rotation wenigstens annähernd synchron entgegengesetzt gerichtete Bewegung erzeugt.

Vorrichtungen zur Rundumsicht, die den gesamten Winkelbereich von 360 Grad beobachten können, werden vielfach zu Kontroll-, Überwachungs- oder Beobachtungszwecken eingesetzt, zum Beispiel an Bootsmasten. Weil sich durch die zügige Drehung der Vorrichtung jedoch der Ausschnitt des Sehfeldes während der Aufnahmezeit bzw. Belichtung verändert, entstehen verschwommene Bilder.

Um diese Bewegungsunschärfe zu vermeiden, wird bislang bei herkömmlichen Rundumsichtgeräten die Drehbewegung im Moment der Aufnahme abrupt gestoppt. Der Sensorkopf bzw. das gesamte Rundumsichtgerät bleibt stehen, während belichtet wird, und dreht dann ruckartig weiter, bis die nächste Aufnahme getätigt wird.

Diese herkömmliche Methode der Taktung ist allerdings problematisch hinsichtlich der technischen Umsetzung, weil eine große Masse, nämlich in der Regel die komplette Vorrichtung zur Rundumsicht, schnell beschleunigt und abrupt wieder abgebremst werden muss. Diese Methode hat sich als sehr aufwendig und fehleranfällig erwiesen.

Als Alternative kennt man deshalb auch Vorrichtungen zur Rundumsicht, bei denen die Drehbewegung der Vorrichtung bzw. des Gehäuses konstant ist. Im Inneren des Gehäuses ist eine Gegenbewegungseinrichtung vorgesehen, durch welche die durch die Drehung verursachte Bewegungsunschärfe im Moment der Aufnahme kompensiert wird. Man spricht hier von einem sogenannten Descanmechanismus. Die bekannten Descaneinrichtungen sind im afokalen bzw. parallelen Strahlengang angeordnet.

Im US-Patent Nr. US 5,663,825 sind hierzu mehrere Varianten von Descanmechanismen beschrieben, die im afokalen bzw. parallelen Strahlengang angeordnet sind. Es wird ein Spiegel verwendet, der entgegen der Drehbewegung des Rundumsichtgeräts während der Abbildungszeit bewegt wird.

Aus dem US-Patent Nr. US 5,338,933 ist eine Descaneinrichtung bekannt, bei der für ein Descannen ein Spiegel vorgesehen ist, der sich während der Belichtung in entgegengesetzter Richtung zum Ausblickkopf dreht und nach der Aufnahme eines Bildes schnell in seine Ausgangsstellung zurückspringt, um während der Belichtung für das nächste Bild den Vorgang zu wiederholen. Der Spiegel ist ebenfalls im afokalen bzw. parallelen Strahlengang angeordnet.

Durch die Anordnung der bekannten Descaneinrichtung im afokalen bzw. parallelen Strahlengang ist jedoch ein verhältnismäßig großer Spiegel notwendig, weil die Breite des parallelen Strahlengangs eine entsprechende Größe erforderlich macht. Aufgrund der daraus resultierenden zu beschleunigenden großen Massen sind diese Gegenschwenkeinrichtungen ebenfalls sehr aufwendig in der Herstellung und relativ störanfällig im Betrieb. Darüber hinaus besteht zwischen dem parallelen Strahlengang und dem Detektor ein Abstand, weil hier erst noch mindestens eine zusätzliche Linse angeordnet sein muss, um diese Objekte auf dem Detektor abzubilden.

Der vorliegenden Erfindung liegt deshalb die Aufgabe zugrunde, eine Vorrichtung zur Rundumsicht zu schaffen, bei der eine Bewegungsunschärfe mit einfacheren Mitteln verhindert wird, ohne dass die kontinuierliche Drehbewegung der Vorrichtung zur Rundumsicht unterbrochen wird.

Diese Aufgabe wird erfindungsgemäß dadurch gelöst, dass die Gegenbewegungseinrichtung in einem konvergenten Strahlengang angeordnet ist.

In einer sehr günstigen Weise kann hierfür der konvergente Strahlengang genutzt werden, der sich direkt vor dem Detektor befindet.

Durch die erfindungsgemäße Lösung wird eine Bewegungsunschärfe verhindert, ohne dass die Drehbewegung der Vorrichtung zur Rundumsicht unterbrochen wird. Dadurch muss nicht die gesamte Vorrichtung bzw. das ganze Gehäuse für jede Belichtung abrupt gestoppt und mit großer Antriebsleistung wieder beschleunigt werden.

Gleichzeitig werden die Nachteile ausgeschlossen, welche die Anordnung einer Gegenbewegungseinrichtung im afokalen bzw. parallelen Strahlengang mit sich bringt. Durch die Anordnung der Gegenbewegungseinrichtung im konvergenten Strahlengang ist die Gegenbewegungseinrichtung sehr dicht am Detektor, ohne dass eine oder mehrere weitere Linsen bzw. ein weiterer Strahlengang dazwischen liegt. Durch den geringen Abstand der Gegenbewegungseinrichtung vom Detektor und den schmal zulaufenden, fokussierenden Strahlengang kann eine relativ kleine Gegenbewegungseinrichtung angeordnet werden. Dadurch müssen nur geringe Massen beschleunigt werden. Gleichzeitig wird eine geringere Antriebsleistung für die Gegenbewegungseinrichtung benötigt.

In vorteilhafter Weise weist die Gegenbewegungseinrichtung eine Schwenkachse auf, die parallel zur Drehachse des Drehantriebs ist.

So wird eine einfache, synchrone Gegenbewegung erzeugt. Während der Belichtungszeit bleibt dadurch die abzubildende Szene bzw. der Strahl auf dem Sensor stehen, obwohl sich die Vorrichtung zur Rundumsicht gleichzeitig weiter dreht.

In einer besonders vorteilhaften Ausgestaltung weist die Gegenbewegungseinrichtung eine transmittierende Platte auf, wobei die transmittierende Platte als planparallele Platte ausgebildet sein kann.

Während bei einer Anordnung der Gegenbewegungseinrichtung im afokalen bzw. parallelen Strahlengang ein Spiegel bzw. ein Keil verwendet werden muß, kann bei einer Anordnung der Gegenbewegungseinrichtung im konvergenten Strahlengang eine planparallele Platte verwendet werden, die einfacher und günstiger zu fertigen ist und eine geringere Anforderung an die Antriebsleistung stellt.

Durch die Anordnung der planparallelen Platte kann zwar ein Astigmatismus auftreten, aber es wurde festgestellt, dass dies bei der optischen Rechnung berücksichtigt und entsprechend ausgeglichen werden kann.

Nachfolgend ist ein Ausführungsbeispiel anhand der Zeichnungen prinzipmäßig näher beschrieben.

### Es zeigt:

- Figur 1: eine Prinzipdarstellung des Aufbaus einer erfindungsgemäßen Vorrichtung zur Rundumsicht.
- Figur 2: eine Prinzipdarstellung der planparallelen Platte in Draufsicht.

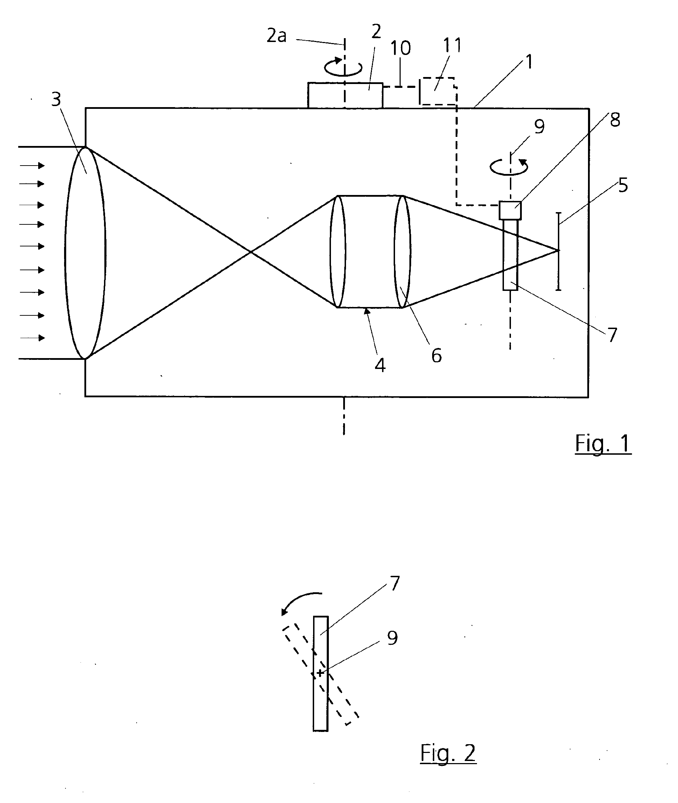

Figur 1 zeigt eine Vorrichtung zur Rundumsicht. An einem Gerätegehäuse 1 ist ein nicht näher dargestellter Drehantrieb 2 angeordnet. Die Vorrichtung zur Rundumsicht weist ein Linsensystem mit einem Objektiv 3 und mit einem Okular 4 auf. Das Bild eines Objekts (bzw. die Strahlung) wird nach Durchgang durch das Linsensystem auf einem Detektor 5 abgebildet. Zur Kompensierung der durch die Drehung des Drehantriebs 2 verursachten Bewegungsunschärfe ist im konvergenten Strahlengang vor dem Detektor 5, der durch eine letzte Linse 6 erzeugt wird, eine Gegenbewegungseinrichtung 8 mit einer nicht näher dargestellten Schwenkeinrichtung vorgesehen. Die Gegenbewegungseinrichtung 8 weist eine transmittierende Platte auf, wobei die transmittierende Platte als planparallele Platte 7 ausgebildet ist.

Die Gegenbewegungseinrichtung 8 mit der Platte 7 erzeugt eine Gegenbewegung, die während der Abbildungszeit zu der durch den Drehantrieb 2 erzeugten Rotation wenigstens annähernd entgegengesetzt synchron verläuft. Dadurch bleibt das abzubildende Objekt bzw. die Strahlung während der Abbildungszeit auf dem Detektor 5 scheinbar optisch stehen, obwohl sich das Gerätegehäuse 1 gleichzeitig weiter dreht. Nachdem die Gegenbewegungseinrichtung 8 während der Abbildungszeit die Gegenbewegung erzeugt hat, nimmt die Gegenbewegungseinrichtung 8 wieder ihre ursprüngliche Lage ein, um den Vorgang bei der Belichtung des nächstens Bildes zu wiederholen.

Im prinzipmäßigen Ausführungsbeispiel sind zum Beispiel 50 Halbbilder pro Sekunde vorgesehen, was bedeutet, dass zumindest annähernd exakt alle 20 Millisekunden eine Abbildung erzeugt wird. Die Abbildungszeit (Belichtungszeit), in der die Gegenbewegungseinrichtung 8 die Gegenbewegung erzeugt, beträgt zirka vier Millisekunden. Für die Neuanordnung der Gegenbewegungseinrichtung 8 in der ursprünglichen Ausrichtung sind weniger als 16 Millisekunden vorgesehen. Selbstverständlich sind auch andere Intervalle möglich.

Durch die Anordnung der Gegenbewegungseinrichtung 8 im konvergenten Strahlengang zwischen der letzten Linse 6 und dem Detektor 5 kann die Gegenbewegungseinrichtung 8 sehr nahe an dem Detektor 5 angeordnet werden, wodurch eine deutlich kleinere Gegenbewegungseinrichtung 8 benötigt wird, als dies bei einer Anordnung in einem afokalen bzw. parallelen Strahlengang der Fall wäre.

Die Erfindung ist dabei nicht auf das in Figur 1 beispielhaft dargestellte Linsensystem beschränkt. Denkbar sind auch alle anderen dem Fachmann bekannte Linsensysteme.

Denkbar wäre auch die Anordnung der Gegenbewegungseinrichtung 8 im Bereich eines anderen konvergenten Strahlengangs, der in dem Linsensystem angeordnet ist.

Eine Steuereinheit 12 mit Steuerleitungen 11 sorgt für die synchron entgegengesetzte Bewegung.

Aus Figur 2 ist in Draufsicht die planparallele Platte 7 ersichtlich. Die gestrichelte Darstellung zeigt die Stellung der planparallelen Platte 7 nach einer Gegenbewegung während der Abbildungszeit, wobei die Gegenbewegung entgegengesetzt synchron verläuft zu einer durch den Drehantrieb 2 des Gerätegehäuses 1 erzeugten Rotation. Die Schwenkachse 9 der Gegenbewegungseinrichtung 8 ist parallel zur Drehachse 2a des Drehantriebs 2.

## Patentansprüche

1. Vorrichtung zur Rundumsicht, mit einem Abbildungssystem, das in einem mit einem Drehantrieb versehenen Gerätegehäuse angeordnet ist, wobei das Abbildungssystem ein Linsensystem aufweist, durch welches die Bilder der Objekte nach Durchgang durch das Linsensystem auf einem Detektor abgebildet werden, und wobei zur Kompensierung der durch die Drehung verursachten Bewegungsunschärfe eine Gegenbewegungseinrichtung im Strahlengang vorgesehen ist, die während der Abbildungszeit eine zu der durch den Drehantrieb erzeugten Rotation wenigstens annähernd synchron entgegengesetzt gerichtete Bewegung erzeugt, **dadurch gekennzeichnet, daß** die Gegenbewegungseinrichtung (8) in einem konvergenten Strahlengang des Linsensystems angeordnet ist.

2. Vorrichtung nach Anspruch 1, **dadurch gekennzeichnet, daß** die Gegenbewegungseinrichtung (8) in dem konvergenten Strahlengang zwischen der im Linsensystem letzten Linse (6) und dem Detektor (5) angeordnet ist.

3. Vorrichtung nach Anspruch 1, **dadurch gekennzeichnet, daß** die Gegenbewegungseinrichtung (8) eine Schwenkachse (9) aufweist, die parallel zur Drehachse (2a) des Drehantriebes (2) ist.

4. Vorrichtung nach Anspruch 1 oder 2, **dadurch gekennzeichnet, daß** die Gegenbewegungseinrichtung (8) eine transmittierende Platte aufweist.

5. Vorrichtung nach Anspruch 1, 2 oder 3, **dadurch gekennzeichnet, daß** die transmittierende Platte als planparallele Platte (7) ausgebildet ist.
